# EUROPÄISCHE PATENTSCHRIFT

(11) **EP 1 086 766 B1**
(45) Veröffentlichungstag und Bekanntmachung des Hinweises auf die Patenterteilung: **02.03.2005**
(21) Anmeldenummer: 00120494.0
(22) Anmeldetag: 20.09.2000
(51) Int. Cl.: B23B 29/034, B23Q 11/10, B23B 29/03, B23B 51/06

(54) **Werkzeug zur spanabtragenden Bearbeitung von Werkstücken**
Tool for chip removal on workpieces
Outil à enlèvement de copeaux de pièces

(30) Priorität: 22.09.1999 DE 19945480
(43) Veröffentlichungstag der Anmeldung: 28.03.2001
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav, Dr.jur. Dipl.-Ing.

(56) Entgegenhaltungen:
- WO-A-97/05987
- DE-C- 4 327 232

## Beschreibung

Die Erfindung betrifft ein Werkzeug zur spanabtragenden Bearbeitung von Werkstücken gemäß Oberbegriff des Anspruchs 1.

Bekannte Werkzeuge der hier angesprochenen Art weisen einen Vorratsraum auf, in den ein Schmierund/oder Kühlmittel eingebracht ist. Ein im Vorratsraum verschieblich gelagerter Schieber kann das Schmier- und/oder Kühlmittel mit einem Überdruck beaufschlagen, so daß dieses über geeignete Kanäle in den Bereich der spanabtragenden Bearbeitung gefördert wird. Es hat sich herausgestellt, daß in vielen Fällen die Dosierung des Schmier- beziehungsweise Kühlmittels nicht feinfühlig genug ist und daß dadurch entweder eine zu starke Verunreinigung der bearbeiteten Werkstückflächen eintritt oder aber daß die Schmier- und/oder Kühlwirkung nicht ausreichend ist.

Aus der Patentschrift DE 43 27 232 C1 sind eine Vorrichtung zum Fließbohren und ein Fließbohrer bekannt. Es ist eine Schmiermittelversorgungseinrichtung vorhanden, die einen Vorratsbehälter aufweist, der außerhalb des Fließbohrers vorgesehen ist, und eine davon ausgehende Schmiermittelleitung umfaßt. Die Schmiermittelleitung ist mit dem Fließbohrer verbindbar. Dem Vorratsbehälter ist ein Kolben zugeordnet, der eine Dosierung des Schmiermittels erlaubt. Es wird hierdurch eine kontinuierliche Zufuhr von Schmiermittel während des Fließbohrens erreicht. Der Kolben ist über eine Gewindespindel verstellbar. Die Gewindespindel ist an ihrem, dem Kolben abgewandten Ende mit einem Stellrad zur Dosierung der abzugebenden Schmiermittelmenge versehen. Die Dosierung erfolgt durch mehr oder minder schnelles Hineindrehen des Stellrades, beispielsweise über einen Stellantrieb oder von Hand.

Aufgabe der Erfindung ist es daher, ein Werkzeug zu schaffen, das die oben genannten Nachteile nicht aufweist.

Zur Lösung dieser Aufgabe wird ein Werkzeug vorgeschlagen, das die in Anspruch 1 aufgeführten Merkmale umfaßt. Das Werkzeug zeichnet sich dadurch aus, daß ein mit einer Schalteinheit versehener Aktuator vorgesehen ist, der mit dem Schieber so zusammenwirkt, daß gezielt Schmier- und/oder Kühlmittel ausgetragen werden kann. Es ist damit möglich, eine Über- und/oder Unterdosierung des Schmier- und Kühlmittels sicher zu vermeiden.

Bevorzugt wird ein Ausführungsbeispiel, das sich dadurch auszeichnet, daß der Aktuator einen Elektromotor umfaßt, mit dem das Schmier- und Kühlmittel gezielt ausgetragen werden kann.

Bevorzugt wird außerdem ein Ausführungsbeispiel des Werkzeugs, bei dem ein Getriebe vorgesehen ist. Durch Auslegung des Getriebes kann Einfluß auf die Kräfte genommen werden, die auf den Schieber wirken. Auch kann die Geschwindigkeit der Schiebebewegung so beeinflußt werden, daß sich der gewünschte Fluidaustrag ergibt. Dabei ist diese technische Lösung einfach und kostengünstig realisierbar.

Bei einem weiteren bevorzugten Ausführungsbeispiel ist vorgesehen, daß der Aktuator einen Pneumatikund/oder Hydraulik-Antrieb umfaßt, über den der Schieber mit einer Druckkraft beaufschlagt werden kann. Es ist also möglich, bestehende Pneumatikund/oder Fluidsysteme einer Werkzeugeinrichtung mit dem hier angesprochenen Werkzeug zu kombinieren und den Schieber auf diese Weise mit einer Druckkraft zu beaufschlagen. Der bearbeitete Bereich des Werkstücks wird dabei mit einer im Vorratsraum vorhandenen Flüssigkeit beaufschlagt und nicht mit einem Schmier- und/oder Kühlmittel einer werkzeugmaschine, das möglicherweise verunreinigt ist. Durch die Schalteinheit kann dabei sichergestellt werden, daß die Schmierung und/oder Kühlung des bearbeiteten Bereichs des Werkstücks definiert mit dem im Vorratsraum vorhandenen Fluid beaufschlagt wird.

Weitere Ausgestaltungen ergeben sich aus den übrigen Unteransprüchen.

Die Erfindung wird im folgenden anhand der Zeichnungen näher erläutert. Es zeigen:
- Figur 1: einen Längsschnitt durch ein Werkzeug und
- Figur 2: einen Schnitt entlang der in Figur 1 wiedergegebenen Linie II-II.

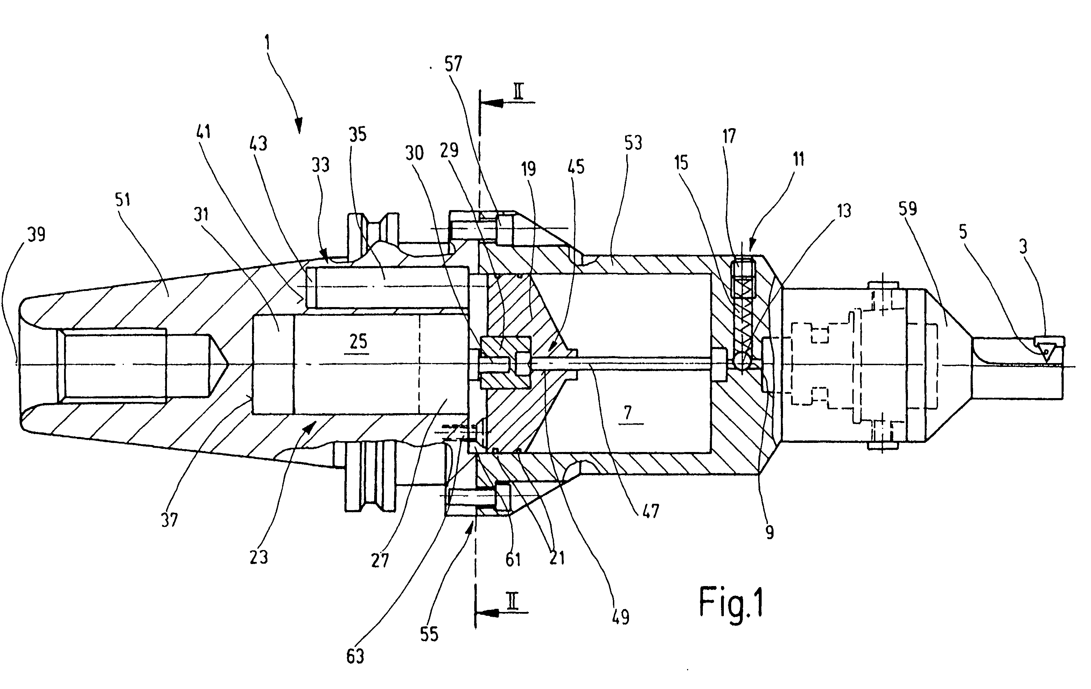

Der Längsschnitt gemäß Figur 1 zeigt ein Werkzeug 1 zur spanabtragenden Bearbeitung von Werkstücken, insbesondere von metallischen Werkstücken, mit hier einer Messerplatte 3, die von einer hier nur angedeuteten Spannpratze 5 gehalten wird. Bei einer Relativdrehung zwischen Werkzeug 1 und einem zu bearbeitenden Werkstück trägt die Messerplatte 3 Späne von dem Werkstück ab.

Das Werkzeug 1 weist einen Vorratsraum 7 auf, in den auf seiner der Messerplatte 3 zugewandten Seite ein Auslaßkanal 9 mündet. Es ist hier eine Ventilund Drosseleinrichtung 11 vorgesehen, nämlich eine mit einer Federkraft beaufschlagte Kugel 13, die in der hier dargestellten Funktionsstellung den Auslaßkanal 9 verschließt. Die Federkraft wird hier durch eine Schraubenfeder 15 bewirkt, die sich einerseits an der Kugel und andererseits an einer Stellschraube 17 abstützt, mittels derer die Federkraft einstellbar ist. Das durch den Auslaßkanal 9 geleitete, im folgenden kurz als Fluid bezeichnete Schmier- und/oder Kühlmittel, welches sich im Vorratsraum 7 befindet, wird auf geeignete Weise zur Messerplatte 3 weitergeleitet, möglicherweise auch noch mit einem Gas, beispielsweise Luft, gemischt.

In den Vorratsraum 7 ist ein Schieber 19 eingebracht, der diesen druckdicht abschließt. Er liegt also mit seiner Außenfläche dichtend an der Wandung des Vorratsraums 7 an. Hier sind beispielhaft zusätzlich zwei als O-Ring ausgebildete Dichtungen 21 vorgesehen.

Das Werkzeug 1 umfaßt einen Aktuator 23, der hier einen Elektromotor 25 aufweist. Dieser kann noch mit einem Getriebe 27 versehen sein. Der Aktuator 23 ist über eine Kupplung 29 mit dem Schieber 19 verbunden. Die Kupplung 29 ist über einen Antriebsstift 30 mit dem Elektromotor 25 beziehungsweise dessen Getriebe 27 verbunden. Der Aktuator 23 ist mit einer Schalteinheit 31 versehen, die in einer ersten Schaltstellung den Aktuator aktiviert und in einer zweiten Schaltstellung diesen deaktiviert. Die Schalteinheit 31 kann auf verschiedene Weise, auch durch außerhalb des Werkzeugs liegende Schaltmittel - beispielsweise über Funk- oder Infrarot-Signale - aktiviert werden. Bei dem hier dargestellten Ausführungsbeispiel ist vorgesehen, daß die Schalteinheit 31 als Fliehkraftschalter ausgebildet ist, der oberhalb einer bestimmten Grenzdrehzahl seine erste Schaltstellung einnimmt, in der der Elektromotor 25 eingeschaltet ist, und der unterhalb dieser Grenzdrehzahl seine zweite Schaltstellung einnimmt, in der der Elektromotor 25 deaktiviert ist.

Der Elektromotor 25 wird auf geeignete Weise mit Energie versorgt. Die Energieversorgung 33 ist hier in das Werkzeug 1 integriert. Bei der Schnittdarstellung gemäß Figur 1 ist eine Energiezelle 35, die als Batterie oder wiederaufladbarer Akkumulator ausgelegt ist, erkennbar.

Figur 1 läßt erkennen, daß der Aktuator 23 und die Schalteinheit 31 in einer gemeinsamen ersten Ausnehmung 37 untergebracht sind, nämlich in einer konzentrisch zur Mittel- oder Drehachse 39 liegenden Bohrung. Die Energiezelle 35 ist in einer zweiten Ausnehmung 41 untergebracht, nämlich in einer parallel zur ersten Ausnehmung 37 verlaufenden Bohrung. Die Darstellung läßt noch erkennnen, daß die Energiezelle 35 durch ein elastisches Element 43 vibrationsarm innerhalb der zweiten Ausnehmung gesichert wird.

Die Kupplung 29 wirkt mit einem Gewindetrieb 45 zusammen, nämlich mit einer Gewindestange 47, die mit einem Außengewinde versehen ist und die innerhalb einer im Schieber 19 vorgesehenen Bohrung 49 verläuft. Diese ist mit einem Innengewinde versehen, das mit einem an der Gewindestange 47 vorgesehenen Außengewinde kämmt. Wird die Kupplung 29 über den Aktuator 23, das heißt über den Elektromotor 25 und gegebenenfalls über ein Getriebe 27, in Rotation versetzt, so wird der Schieber 19 durch den Gewindetrieb 45 je nach Drehrichtung des Motors und nach Auslegung des Gewindetriebs nach links oder rechts verlagert. Die Verlagerungsgeschwindigkeit hängt dabei von der Drehzahl des Elektromotors 25, der Auslegung des Getriebes 27 und/oder der Gewindeauslegung des Gewindetriebs 45 ab.

Das in Figur 1 dargestellte Werkzeug 1 ist mehrteilig ausgebildet. Es weist einen Befestigungskegel 51 auf, der mit einer entsprechenden Aufnahme in einer Werkzeugmaschine zusammenwirken kann, und ein Gehäuseteil 53, das über einen Befestigungsflansch 55 und geeignete Befestigungsschrauben 57 mit dem Befestigungskegel verbunden ist. An dem Gehäuseteil 33 ist hier noch ein drittes Element, nämlich ein Werkzeugteil 59 angebracht, das die Messerplatte 3 umfaßt. Das Werkzeugteil 59 kann austauschbar sein, um das Werkzeug 1 an verschiedene Bearbeitungsarten anpassen zu können.

Figur 1 läßt erkennen, daß der Aktuator 23 innerhalb des Befestigungskegels 51 untergebracht ist, während der Vorratsraum 7 für Schmier- und/oder Kühlmittel im Gehäuseteil 53 liegt. Öffnet man das Werkzeug 1 im Bereich des Befestigungsflansches 55, so sind der Aktuator 23 und dessen Energiezelle 35 frei zugänglich. Dies gilt auch für den Schieber 19 im Gehäuseteil 53.

Die in den Befestigungskegel 51 eingebrachte erste Ausnehmung 37 und zweite Ausnehmung 41 sind durch eine Platte 61 verschlossen, die auf geeignete Weise befestigt ist. Es ist hier eine Schraube 63 angedeutet. Die Anzahl und Auslegung der Schrauben kann auf den jeweiligen Anwendungsfall angepaßt werden.

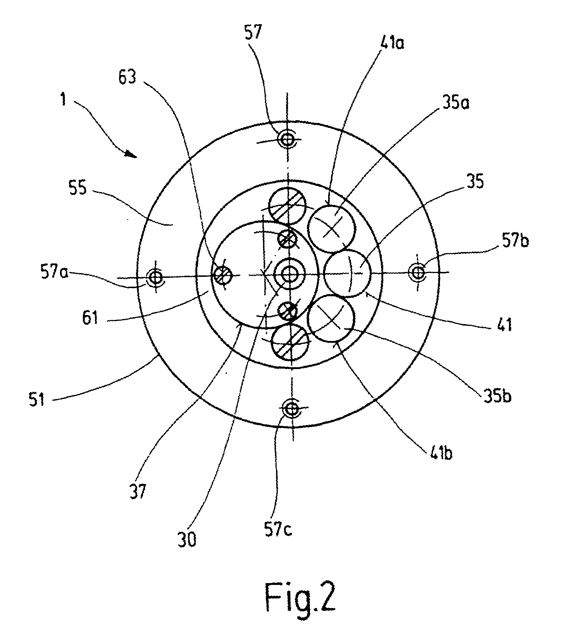

Figur 2 zeigt einen Schnitt durch das Werkzeug 1 entlang der in Figur 1 wiedergegebenen Linie II-II beziehungsweise eine Draufsicht auf das rechte Ende des Befestigungskegels 1 im Bereich des Befestigungsflansches 55. Gleiche Teile sind mit gleichen Bezugsziffern versehen, so daß insoweit auf die Beschreibung zu Figur 1 verwiesen wird.

Figur 2 zeigt, daß der Befestigungsflansch 55 hier 4 Befestigungsschrauben 57, 57 a, 57 b, 57 b umfaßt und daß die Platte 61 kreisrund ausgebildet ist und die erste Ausnehmung 37 und die zweite Ausnehmung 41 abschließt. Bei der hier gewählten Darstellung ist ersichtlich, daß hier noch weitere Ausnehmungen 41 a und 41 b vorgesehen sind, in denen weitere Energiezellen 35 a und 35 b untergebracht sind. Die Anzahl der Energiezellen hängt von der Größe des Werkzeugs ab.

Figur 2 zeigt noch den Antriebsstift 30, der die Kupplung 29 mit dem Aktuator 23 beziehungsweise mit dem Elektromotor 25 beziehungsweise dem Getriebe 27 verbindet. Es ist hier noch angedeutet, daß die Kupplung 27 mit Hilfe von Schrauben 63 am Elektromotor 25 fixiert ist.

Aus der Beschreibung des Werkzeugs 1 wird deutlich, daß bei der spanabtragenden Bearbeitung eines Werkstücks mittels der Messerplatte 3 ein im Vorratsraum 7 vorhandenes Schmier- und/oder Kühlmittel über einen Auslaßkanal 9 gezielt abgegeben werden kann. Dazu wird über die Schalteinheit 31 der Aktuator 23 gezielt aktiviert. Hier wird ab einer bestimmten Grenzdrehzahl ein Fliehkraftschalter betätigt, der den Elektromotor 25 mit Energie aus den Energiezellen 35 versorgt, die dessen Energieversorgung 33 darstellen. Dadurch wird die Kupplung 29 über den Antriebsstift 30 in Rotation versetzt, so daß der Schieber 19 aus seiner in Figur 1 dargestellten linken Endposition, in der der Vorratsraum 7 vollständig gefüllt ist, nach rechts verlagert, so daß das im Vorratsraum 7 vorhandene Fluid unter einen Überdruck gerät und schließlich gegen die Verschlußkraft der Kugel 13 aus dem Auslaßkanal 19 austritt und somit zur Bearbeitungsstelle im Bereich der Messerplatte 3 gelangt. Durch entsprechende Auslegung des Motors 25, des Getriebes 27 und/oder des Gewindetriebs 45 kann die ausgetragene Fluidmenge sehr genau dosiert werden, so daß Verunreinigungen des Werkstücks oder aber eine Unterdosierung des Fluids vermieden werden. Es ist also möglich, das Werkzeug 1 mit einer Drehzahl n1 anzutreiben, die unterhalb der Grenzdrehzahl liegt, und dabei das Werkzeug 1 an die zu bearbeitende Stelle heranzuführen. Durch Beschleunigung des Werkzeugs 1 auf eine der Bearbeitung dienende Drehzahl n2, die oberhalb der Grenzdrehzahl liegt, wird die Fluidzufuhr aktiviert. Fällt die Drehzahl wieder unter die Grenzdrehzahl, wird die Fluidzufuhr wieder deaktiviert.

Nach allem wird deutlich, daß durch den Aktuator 23 auf den Schieber 19 eine Druckkraft ausgeübt wird, so daß sich im Vorratsraum 7 ein Überdruck aufbaut und Fluid ausgetragen werden kann. Daraus ist ersichtlich, daß der Aktuator 23 auch einen Pneumatik- und/oder Hydraulik-Antrieb umfassen kann und mit einer Druckluft- beziehungsweise Fluidquelle einer Werkzeugmaschine verbunden sein kann. Durch die Schalteinheit 31 kann der Pneumatik- und/oder Hydraulik-Antrieb aktiviert und deaktiviert werden, um auf den Schieber 19 eine Druckkraft auszuüben, damit dieser innerhalb des Vorratsraums 7 verlagert wird. Bei einer derartigen Ausgestaltung kann natürlich auf den Gewindetrieb 45 verzichtet werden. Es ist dann möglich, unmittelbar auf dessen den Vorratsraum 7 abgewandten Oberfläche eine Druckkraft auszuüben, um eine Verlagerung des Schiebers 19 zu bewirken.

Aus den Erläuterungen zu den Figuren 1 und 2 ist ersichtlich, daß das Werkzeug 1 hier insbesondere deshalb mehrteilig ausgebildet ist, um eine leichte Erreichbarkeit des Aktuators 23 und eine Austauschbarkeit der Energiezellen 35 a und 35 b zu gewährleisten und Servicearbeiten am Schieber 19 beziehungsweise den Dichtungen 21 durchführen zu können. Es ist denkbar, den Vorratsraum 7 dadurch zu befüllen, daß das Werkzeug 1 im Bereich des Befestigungsflansches 55 geöffnet und der Schieber aus dem Vorratsraum 7 herausgenommen wird, um ein Fluid dort einzubringen. Möglich ist es aber auch, durch das Gehäuseteil 53 eine Bohrung hindurchzuführen, die in den Vorratsraum 7 mündet und mit einem Ventil verschlossen ist.

Aus den Erläuterungen wird schließlich auch deutlich, daß es sehr wohl möglich ist, den Aktuator die Schalteinheit, und/oder den Vorratsraum auch unmittelbar in eine Werkzeugaufnahme beziehungsweise Werkzeugspindel zu integrieren, um die hier beschriebene exakte Dosierung des Schmier- und/oder Kühlmittels zu realisieren. Es ist also beispielsweise möglich, den Aktuator in die Spindel eines Werkzeugs einzubauen und den Vorratsraum im Werkzeug vorzusehen. Es bestehen hier dann allerdings die Schwierigkeiten, diese beiden Elemente miteinander zu koppeln. Besonders einfach ist der Aufbau dann, wenn, wie hier beschrieben, Vorratsraum, Aktuator und Schalteinheit im Werkzeug selbst vorgesehen sind.

## Patentansprüche

1. Werkzeug zur spanabtragenden Bearbeitung von Werkstücken, das mit einer Werzeugaufnahme einer Werkzeugmaschine koppelbar ist, mit einem ein Schmiermittel aufnehmenden Vorratsraum (7), in den ein Schieber (19) verschieblich eingebracht ist, und mit einem mit dem Schieber (19) koppelbaren Aktuator (23), **dadurch gekennzeichnet, dass** der Vorratsraum (7) im Werkzeug (1) und/oder in der Werkzeugaufnahme vorgesehen ist, dass der Aktuator (23) im Werkzeug (1) untergebracht und mit einer Schalteinheit (31) versehen ist, die den Aktuator (23) in einer ersten Schaltstellung aktiviert und in einer zweiten Schaftstetlung deaktiviert.

2. Werkzeug nach Anspruch 1, **dadurch gekennzeichnet, daß** der Aktuator (23) einen Elektromotor (25) umfaßt.

3. Werkzeug in Anspruch 1 oder 2, **dadurch gekennzeichnet, daß** dem Elektromotor (25) ein Getriebe (27) zugeordnet ist.

4. Werkzeug nach einem der vorhergehenden Ansprüche, **dadurch gekennzeichnet, daß** eine Kupplung (29) vorgesehen ist.

5. Werkzeug nach einem der vorhergehenden Ansprüche, **dadurch gekennzeichnet, daß** ein Gewindetrieb (45) vorgesehen ist.

6. Werkzeug nach einem der vorhergehenden Ansprüche, **dadurch gekennzeichnet, daß** die Energieversorgung des Elektromotors (25) in das Werkzeug (1) und/oder in die Werkzeugaufnahme integriert ist.

7. Werkzeug nach einem der vorhergehenden Ansprüche, **dadurch gekennzeichnet, daß** die Schalteinheit (31) einen Fliehkraftschalter umfaßt.

8. Werkzeug nach Anspruch 1, **dadurch gekennzeichnet, daß** der Aktuator einen Pneumatik- und/oder Hydraulik-Antrieb umfaßt, der den Schieber mit einer Druckkraft beaufschlagt.

9. Werkzeug nach Anspruch 8, **dadurch gekennzeichnet, daß** die Schalteinheit eine Ventileinrichtung umfaßt, die mindestens 2 Schaltstellungen einnehmen kann, daß in der ersten Schaltstellung der Schieber mit einer Druckkraft beaufschlagt wird und daß der Schieber in der zweiten Stellung nicht von einer Druckkraft des Pneumatik- und/oder Hydraulik-Antriebs beaufschlagt wird.

## Claims

1. Tool for chip removal on work-pieces that can be coupled with a tool fitting of a machine tool, with a storage room (7) for lubricant, in which a slider (19) is movably fitted, and an actuator (23) that may be coupled with a slider (19), **characterised in that** the storage room (7) is provided inside the tool (1) and/or inside the tool fitting, that the actuator (23) is placed inside the tool (1) and provided with a switching unit (31) that activates the actuator (23) in a first operating position and deactivates it in a second operating position.

2. Tool according to Claim 1, **characterised in that** the actuator (23) comprises an electric motor (25).

3. Tool in Claim 1 or 2, **characterised in that** a gearbox (27) is assigned to the electric motor (25) .

4. Tool according to one of the foregoing claims, **characterised in that** a clutch (29) is provided.

5. Tool according to one of the foregoing claims, **characterised in that** a thread drive (45) is provided.

6. Tool according to one of the foregoing claims, **characterised in that** the energy supply to the electric motor (25) is integrated in the tool (1) and/or in the tool fitting.

7. Tool according to one of the foregoing claims, **characterised in that** the switching unit (31) comprises a centrifugal switch.

8. Tool according to Claim 1, **characterised in that** the actuator comprises a pneumatic and/or hydraulic drive, which subjects the slider to a compressive force.

9. Tool according to Claim 8, **characterised in that** the switching unit comprises a valve device, which can take at least 2 operating positions, that in the first operating position the slider is subjected to a compressive force and that in the second position the slider will not be subjected to a compressive force exerted by the pneumatic and/or hydraulic drive.

## Revendications

1. Outil à enlèvement de copeaux de pièces, susceptible d'être couplé à un porte-outil d'une machine-outil, avec un compartiment de réserve (7) pour recevoir un lubrifiant dans lequel est inséré, de manière à être mobile, un coulisseau (19), et avec un actuateur (23) susceptible d'être couplé au coulisseau (19), **caractérisé en ce que** le compartiment de réserve (7) est prévu dans l'outil (1) et/ou dans le porte-outil, que l'actuateur (23) est hébergé dans l'outil (1) et muni d'une unité de commutation (31) qui active l'actuateur (23) dans une première position de commutation, et le désactive dans une deuxième position de commutation.

2. Outil selon la revendication 1, **caractérisé en ce que** l'actuateur (23) comprend un moteur électrique (25).

3. Outil selon la revendication 1 ou 2, **caractérisé en ce qu'**un engrenage (27) est assigné au moteur électrique (25).

4. Outil selon l'une des revendications précédentes, **caractérisé en ce qu'**un coupleur (29) est prévu.

5. Outil selon l'une des revendications précédentes, **caractérisé en ce qu'**une tige filetée (45) est prévue.

6. Outil selon l'une des revendications précédentes, **caractérisé en ce que** l'alimentation en énergie du moteur électrique (25) est intégrée dans l'outil (1) et/ou dans le porte-outil.

7. Outil selon l'une des revendications précédentes, **caractérisé en ce que** l'unité de commutation (31) comprend un contacteur centrifuge.

8. Outil selon la revendication 1, **caractérisé en ce que** l'actuateur comprend un entraînement pneumatique et/ou hydraulique soumettant le coulisseau à une force de pression.

9. Outil selon la revendication 8, **caractérisé en ce que** l'unité de commutation comprend un mécanisme de soupape qui peut prendre au moins deux positions de commutation, que dans la première position de commutation, le coulisseau est soumis à une force de pression, et que dans la deuxième position, le coulisseau n'est pas soumis à une force de pression de l'entraînement pneumatique et/ou hydraulique.
